(19) Europäisches Patentamt
European Patent Office
Office européen des brevets

(11) Publication number: 0 255 296 A2

(12) **EUROPEAN PATENT APPLICATION**

(21) Application number: 87306544.5

(51) Int. Cl.4: C08F 10/00 , C08F 4/78

(22) Date of filing: 23.07.87

(30) Priority: 30.07.86 GB 8618586
28.05.87 GB 8712535
28.05.87 GB 8712534

(43) Date of publication of application:
03.02.88 Bulletin 88/05

(84) Designated Contracting States:
AT BE CH DE ES FR GB GR IT LI LU NL SE

(71) Applicant: BP Chemicals Limited
Belgrave House 76 Buckingham Palace Road
London, SW1W 0SU(GB)

(72) Inventor: Dawkins, Gordon Michael
BP Chemicals Limited Bo'ness Road
Grangemouth
Stirlingshire FK3 9XH Scotland(GB)

(74) Representative: Hymers, Ronald Robson et al
BP INTERNATIONAL LIMITED Patents
Division Chertsey Road
Sunbury-on-Thames Middlesex, TW16
7LN(GB)

(54) **Chromium-containing bimetallic complex catalysts.**

(57) An olefin polymerisation catalyst obtainable by depositing on a dry inorganic oxide a bimetallic chromium-containing organometallic complex representable by the general formula;

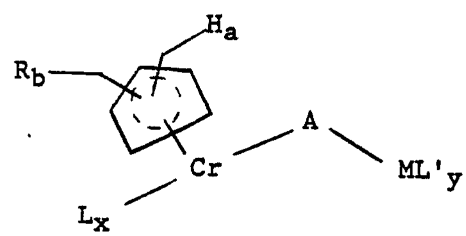

in which the R groups are $C_1$ to $C_6$ hydrocarbyl groups; H is hydrogen; a and b are individually 0 or an integer from 1 to 5, the sum of a + b being equal to 5; M is Ti, Zr, Hf, V, Cr, Fe, Nb, Mn, Ni, or Co; L and L' are ligands which are $C_1$ to $C_{12}$ hydrocarbyl or carbonyl ligands; x is an integer from 1 to 3 depending on the available co-ordination sites on the chromium atom; y is an integer from 1 to 5 depending on the available co-ordination sites on the metal M and A is a metal-metal bond, an ionic bond or at least one carbonyl bridging group. Embodiments include binuclear chromium complexes and complex salts. Also disclosed is a process for polymerising olefins using the catalysts.

EP 0 255 296 A2

# CHROMIUM-CONTAINING BIMETALLIC COMPLEX CATALYSTS

The present invention relates to an olefin polymerisation catalyst and a process for producing polyolefins using the catalyst.

The use of mononuclear chromium complexes for the polymerisation of olefins is known. For example, British Patent Specification GB 1253063 discloses a process for the polymerisation of ethylene comprising contacting ethylene, optionally in the presence of hydrogen, with a catalytic amount of bis (cyclopentadienyl) chromium (II) adsorbed on an inorganic oxide at a temperature and pressure sufficient to initiate the polymerisation reaction. US Patent US 3844975 discloses the homopolymerisation of ethylene or copolymerisation of ethylene with other alpha-olefins using as a catalyst cyclopentadienyl chromium tricarbonyl hydride supported on an activated silica and/or alumina support, the catalyst having been thermally aged in an inert atmosphere.

The use of dinuclear chromium complexes for the polymerisation of ethylene homopolymers and copolymers is also known from US Patent No 4359562 which discloses a supported catalyst which contains, on a finely divided porous inorganic oxide, a chromium-hydrocarbon complex of the formula [R Cr A Cr R] where R is an unsaturated cyclic and/or open chain hydrocarbon or hydrocarbon radical such as cyclooctatetraene or a monovalent cyclopentadienyl radical and A is an unsubstituted or substituted cyclooctatetraene or a divalent n-octatetraene radical.

It has now been found that certain bimetallic complexes, when supported on an inorganic oxide, can be used as catalysts for the polymerisation of olefins, in particular the homopolymerisation of ethylene or copolymerisation of ethylene with one or more $C_3$ to $C_8$ alpha-olefins and can provide a means for regulating the molecular weight distribution and other properties of the polymer produced. In particular, the supported bimetallic catalysts can be used to produce polymers having relatively broad molecular weight distributions and to produce polymers having bimodal or asymmetric distributions. Polymers having a broad molecular weight distribution with a high molecular weight tail can be produced using the supported bimetallic catalysts. Such polymers may have relatively high stress crack resistance and are particularly useful for blow moulding or film production.

According to the present invention an olefin polymerisation catalyst obtainable by depositing on a dry inorganic oxide a chromium-containing organometallic complex is characterised in that the chromium-containing organometallic complex is a bimetallic complex comprising chromium and a second transition metal which complex is representable by the general formula;

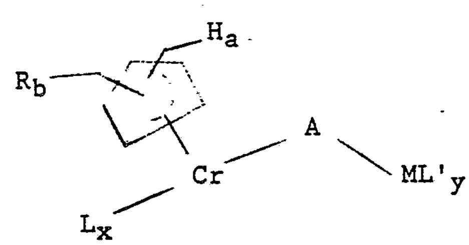

wherein the groups R are $C_1$ to $C_6$ saturated or unsaturated hydrocarbyl groups;
H is hydrogen;
a and b are individually 0 or an integer from 1 to 5, the sum of a + b being equal to 5;
M is a transition metal selected from the group consisting of Ti, Zr, Hf, V, Cr, Fe, Nb, Mn, Ni and Co;
the groups L and L' are ligands which are a carbonyl ligand or a $C_1$ to $C_{15}$ hydrocarbyl ligand;
$_x$ is an integer from 1 to 3 depending on the available co-ordination sites on the chromium atom;
$_y$ is an integer from 1 to 5 depending on the available co-ordination sites on the transition metal M and
A represents the linkage between the chromium atom and the transition metal M and is a direct metal-metal bond, an ionic bond, at least one carbonyl bridging group or a combination thereof.

The general formula given hereinabove for the chromium-containing bimetallic complex provides a convenient means for defining the complexes which are suitable for use in the present invention but should not be taken as implying a strict structural arrangement of the atoms and ligands.

The groups R in the general formula are preferably saturated and can be, for example, methyl, ethyl, propyl, isopropyl, n-butyl, isobutyl n-pentyl or n-hexyl. Preferably all of the groups R are the same and most preferably they are all methyl.

The L and L′ ligands are preferably ligands capable of stabilising the low oxidation states of the metals. Ligands which have been found to be particularly suitable for L and L′ include, carbonyl, methyl and substituted or unsubstituted cyclopentadienyl ligands.

Preferably at least one L′ ligand is a substituted or unsubstituted cyclopentadiene. The L Ligands are preferably carbonyl.

If the second transition metal M is also chromium, the two nuclear atoms may have the same or different valencies.

In one embodiment of the present invention the chromium-containing organometallic complex is a binuclear chromium complex in which M is Cr, y is an integer from 1 to 3, b is 5 and the substituted groups R are the same or different and are alkyl groups having from 1 to 6 carbon atoms. Preferably all of the groups R are methyl groups.

In another embodiment of the present invention the chromium-containing organometallic complex is a complex salt in which A is an ionic bond, L is carbonyl, x is 3, M is Cr, y is 2 and the L′ ligands are individually (a) benzene which can be substituted with up to six $C_1$ to $C_6$ hydrocarbyl groups which can be the same or different provided that the total number of carbon atoms does not exceed 15 or (b) cyclopentadienyl which can be substituted with up to five $C_1$ to $C_6$ hydrocarbyl groups which can be the same or different provided that the total number of carbon atoms does not exceed 15. The complex salt can therefore be represented by the general formula $[Cr\ L'_1\ L'_2]\ [Cr\ (CO)_3\ (C_5\ H_a\ R_b\ )]$ in which $L'_1$ and $L'_2$ are the L′ ligands as defined above and R, a and b are as defined hereinbefore. Suitable ligands from which $L'_1$ and $L'_2$ can be selected include cumene, benzene, xylene, hexamethyl benzene and toluene ligands. Preferably, $L'_1$ and $L'_2$ are pentamethyl cyclopentadienyl or cyclopentadienyl ligands. Preferably $L'_1$ and $L'_2$ are the same.

An example of a suitable binuclear chromium complex for use in the present invention is bis(dicarbonyl pentamethyl cyclopentadienyl chromium). Examples of suitable complex salts suitable for use in the present invention are bis (pentamethyl-cyclopentadienyl) chromium triscarbonyl cyclopentadienyl chromium, bis cyclopentadienyl chromium triscarbonyl cyclopentadienyl chromium, bis cumene chromium tris carbonyl cyclopentadienyl chromium. Examples of other chromium containing bimetallic complexes suitable for use in the present invention are $[VCr\ (CO)_3\ (C_5H_5)_3]$, $[Zr\ Cr\ (CO)_3\ CH_3\ (C_5H_5)_3]$, $[Cr_2(CO)_6\ (C_5H_5)_2]$ and $[Cr_2\ (CO)_4\text{-}(C_5H_5)_2]$ Chromium-containing bimetallic complexes suitable for use in the present invention are known and can be prepared by known methods or can be prepared by methods analogous to known methods. For example, chromium containing heterobimetallic complexes can be prepared by mixing stoichiometric quantities of homobimetallic complexes containing the desired metals. This process is disclosed, for example, in Chem. Ber. 1980, 113, T. Madach and H. Vahrenkamp page 2675 et seq. A method for preparing heterobimetallic complexes by simply mixing together two monometallic complexes is disclosed in J. Organomet. Chem. 1978, 150 , C9 by P. Renaut, G. Tainturier and B. Gautheron. Techniques which are known for molybdenum compounds such as, for example, those disclosed in J. Organomet. Chem. 1978, 157 by R. Birdwhistell,P. Hackett and A.R. Manning at page 239 et seq, may also be used to produce analogous chromium compounds. For example, the compound $[CrZr(CO)_3CH_3(C_5H_5)_3]$ disclosed in Organometallic Compounds by B.L. Shapiro; Texas A & M. University, 1983 at page 260 et seq can be prepared in an identical manner to $[MoZr(CO)_3CH_3(C_5H_5)_3]$, as described in the article by P. Renaut et al referred to above, by simply mixing equimolar quantities of $[CrH(CO)_3(C_5H_5)]$ and $[Zr(CH_3)_2(C_5H_5)_2]$ at room temperature (about 20°C) in tetrahydrofuran. A procedure for the preparation of biscyclopentadienyl chromium tris carbonyl cyclopentadienyl chromium is described in Angew Chem. Internat. Edit. 1969, 8, 520 by A. Miyaki, H. Kondo and M. Aoyama. It is believed that at least some of the complex salts suitable for use in the present invention may be novel compounds. However, they can be prepared by analogous methods to those described in the literature. For example,bis (pentamethyl cyclopentadienyl) chromium tris carbonyl cyclopentadienyl chromium, can be prepared using essentially the same procedure as that disclosed by Miyaki et al in the above mentioned article.

In situ preparations of the catalyst precursors in which the bimetallic complex is formed in solution and deposited directly onto the inorganic oxide support advantageously reduces the number of process steps required to prepare the catalyst.

Any suitable inorganic oxide can be used to support the chromium-containing bimetallic complex including, for example, silica, alumina, silica-alumina mixtures, thoria, zirconia, magnesia, titania and mixtures thereof. Preferably, the inorganic oxide comprises a major amount of silica. More preferably, the inorganic oxide comprises at least 80% by weight of silica.

The particle size of the inorganic oxide support is not considered to be particularly critical, but the inorganic oxide preferably has a relatively high surface area. The surface area of the inorganic oxide is preferably greater than $20m^2g^{-1}$, more preferably from 50 to 1000 $m^2g^{-1}$.

The chromium-containing bimetallic complexes are sensitive to moisture and so the inorganic oxide used to support the complex should be dry. The inorganic oxide can be dried simply by heating the oxide in a dry, inert atmosphere. The drying may be carried out at any temperature up to the temperature at which the oxide begins to sinter for a period of time which is at least sufficient to remove the physically adsorbed water. Typically, the drying may be carried out at a temperature of from 200 to 1000°C for a period of from 6 to 36 hours. Preferably, the temperature used is at least 300°C, more preferably at least 500°C, but is preferably less than 900°C. A suitable inert atmosphere can be provided, for example by carrying out the heating under a blanket of an inert gas such as nitrogen or argon. Preferably, the inert gas is passed through the inorganic oxide during the drying to assist in displacing the water.

The melt index of the polymer produced using the supported catalyst may be affected by the selection of the type and grade of inorganic oxide. The temperature at which the inorganic oxide is dried may have an effect on the relative productivity of the catalyst system and on the molecular weight distribution and melt index of the polymer produced.

The chromium-containing bimetallic complex may be deposited on the dry inorganic oxide using known techniques for the preparation of supported catalysts. For example, a slurry technique can be used in which the inorganic oxide is contacted with a solution of the complex under conditions which exclude air and water. The slurry can be stirred for a period of time sufficient to achieve good adsorption of the chromium-containing bimetallic complex on the inorganic oxide support e.g. up to about 4 hours. Any suitable dry solvent may be used such as for example dichloromethane.

The supported catalyst may be used in the form of a slurry or paste. However, the solvent is preferably removed, e.g. by filtration or evaporation in a dry, inert atmosphere to produce a dry free-flowing powder.

Direct vapour deposition may also be used in some cases to deposit the chromium-containing bimetallic complex on the inorganic oxide. This may conveniently be carried out by blending the complex and the inorganic oxide in a dry, inert atmosphere and then reducing the pressure to cause the chromium-containing bimetallic complex to sublime and adsorb onto the inorganic oxide support. This technique is not suitable for complex salts.

Typically, the amount of the chromium-containing bimetallic complex deposited on the inorganic oxide support is such that the amount of chromium is from 0.01 to 10% by weight of the total weight of the complex and inorganic oxide. Preferably, the supported catalyst contains from 0.1 to 5% more preferably from 1 to 2% by weight of chromium. Mixtures of chromium-containing bimetallic complexes can be deposited simultaneously or sequentially onto the inorganic oxide support.

The present invention includes a process for the production of polyolefins, in particular homopolymers of ethylene and copolymers of ethylene with minor amounts of at least one $C_3$ to $C_8$ alpha-olefin, which process comprises contacting the monomer or monomers, optionally in the presence of hydrogen, with an olefin polymerisation catalyst according to the present invention and as hereinbefore defined at a temperature and pressure sufficient to initiate the polymerisation reaction.

Before using the supported catalyst in a polymerisation process, it is preferably activated by heating the supported catalyst at a temperature of at least 100°C but preferably less than 700°C for a period of at least 5 mins, preferably 10 mins to 24 hours.Preferably, the activation is carried out at a temperature of from 100 to 350°C for a period of time from 10 to 120 minutes. The thermal activation should be carried out in an inert atmosphere e.g. under nitrogen, argon or vacuum.

The supported olefin polymerisation catalysts according to the present invention may optionally be used in the presence of one or more organo aluminium co-catalyst compounds. Suitable co-catalysts include, for example, trimethylaluminium, triethylaluminium, diethylaluminium hydride, triisobutyl aluminium, tridecylaluminium, tridodecyaluminium, diethylaluminium methoxide, diethylaluminium ethoxide, diethylaluminium phenoxide, diethyl aluminium chloride, ethyl aluminium dichloride and methyl diethoxy aluminium. The co-catalyst can be deposited on the supported catalyst before, during or after the addition of the bimetallic complex or can be added to the polymerisation medium along with the catalyst. Preferably the amount of co-catalyst used is up to 1000 mols of aluminium per mol of chromium in the chromium-containing bimetallic complex of the supported catalyst. More preferably the amount of co-catalyst used is less than 100 most preferably less than 10 mols of aluminium per mol of chromium.

The olefin polymerisation catalyst according to the present invention can be used to produce polymers using solution polymerisation, slurry polymerisation or gas phase polymerisation techniques. Methods and apparatus for effecting such polymerisation reactions are well known. The catalyst according to the present invention can be used in similar amounts and under similar conditions to known olefin polymerisation catalysts such as for example the chromocene catalysts or supported chromium oxide catalysts.

The polymerisation is effected by contacting the monomer(s) with a catalytically effective amount of the olefin polymerisation catalyst according to the present invention, in the substantial absence of catalyst poisons, optionally in the presence of hydrogen, at a temperature and pressure which are sufficient to initiate polymerisation.

Typically, the temperature is from 30 to 110°C for the conventional slurry or "particle form" process and the gas phase process. For the solution process the temperature is typically from 100 to 200°C. The pressure used can be selected from a relatively wide range of suitable pressures e.g. from subatmospheric to about 350 MPa (50,000 psi). Generally, the pressure is from atmospheric up to about 6.9 MPa, preferably from 0.14 to 5.5 MPa.

The invention is illustrated by the following examples.

Example 1

Catalyst Preparation

A commercially available silica sold by Joseph Crosfield and Sons Ltd under the trade designation EP10 was dehydrated at 150°C in a vacuum oven. The silica was then heated at a temperature of 800°C for 24 hours in an oven through which was passed a stream of dry nitrogen. The silica had a surface area of about $280m^2/g$. 10g of the heat treated silica was placed in a 3-necked round bottomed flask, still under an atmosphere of dry nitrogen. 1.1g of a bimetallic complex having the general formula $[VCr(CO)_3(C_5H_5)_3]$ was dissolved in $40cm^3$ of dichloromethane. The bimetallic complex had been prepared according to the method described in Angew Chem. Internat. Edit. 1969, 8, by A. Miyaki, H. Kondo and M. Aoyama at page 520 et seq. The solution, which was dark brown in colour was introduced into the three-necked flask using a syringe. As the bimetallic complex reacted with the silica, the brown colour was dissipated and a green-brown slurry produced. The slurry was stirred and the solvent removed under vacuum to produce free flowing, green coloured particles.

Catalyst Activation

1.7g of the catalyst produced as described above was placed in a $100cm^3$ reaction flask under a dry nitrogen atmosphere. The flask was immersed in an oil bath maintained at 200°C, the catalyst being continuously stirred. Within one minute of the flask being placed in the oil bath, the colour of the catalyst changed from green to black. Vacuum was then applied to the flask which remained in the oil bath for 30 minutes. The flask was removed from the oil bath and allowed to cool to room temperature (approximately 18°C) under an atmosphere of dry nitrogen.

Polymerisation of Ethylene

Ethylene was homopolymerised in a 2.3 litre stainless steel reactor by contacting the monomer with the catalyst in 1.0 litre of isobutane at 90°C under a total pressure of 600 psig (4.14 MPa) for approximately one hour. The hydrogen pressure used was about 15 psig (0.1 MPa). The weight of catalyst used was 1.3g.

The properties of the polymer produced are given in Table 1.

Examples 2 to 4

Example 1 was repeated except that different bimetallic complexes were used to prepare the catalyst and different amounts of catalyst were used in the polymerisation of ethylene.

The bimetallic complexes used were as follows:-

Example 2: $[ZrCr(CO)_3CH_3(C_5H_5)_3]$

Example 3: $[Cr_2(CO)_6(C_5H_5)_2]$

Example 4: $[Cr_2(CO)_4(C_5H_5)_2]$

The properties of the polymers produced are given in Table 1.

Kd is the rheological polydispersity index as defined by R. Sabia in J. Appl. Polym. Sci. 7 , 347-355 (January 1963).

The melt index was determined according to standard test method ASTM D 1238 Condition E and the melt flow ratio is the ratio of the melt index according to Condition F of ASTM D 1238 to the melt index according to Condition E of ASTM D 1238.

TABLE 1

| Example | Amount of Cr in catalyst (%) | Catalyst Activity (g/g/h) | Melt Index | Melt Flow Ratio | Density ($Kg/m^3$) | Kd |
|---|---|---|---|---|---|---|
| 1 | 1.5 | 180 | 0.1 | 61 | 958 | 3 |
| 2 | 1.5 | 200 | 20 | 32 | 968 | 8 |
| 3 | 2.0 | 400 | 11 | 34 | 966 | 6.7 |
| 4 | 2.0 | 130 | 63 | 40 | - | - |

The results in Table 1 illustrate that the properties of the polymers are affected by the bimetallic catalyst used. For example comparison of the melt flow ratios indicates that the use of the $[VCr(CO)_3(C_5H_5)_3]$ catalyst of Example 1 produces a polymer having a relatively broad molecular weight distribution as compared with the polymers produced in the other Examples. Figure 1 is a graphical representation of gel permeation chromatography data for the polymer of Example 1 plotted as the weight distribution against the logarithm of the molecular weight and shows that the polymer has a high molecular weight tail. The polymer produced in Example 2 apparently has a relatively narrow molecular weight distribution as indicated by the melt flow ratio. The considerable variation in Kd for the polymers of Examples 1 to 3 suggests marked differences in molecular weight distributions for these polymers.

Example 5

Catalyst Preparation

A commercially available silica sold by Joseph Crosfield and Sons Ltd under the trade designation EP10 was dehydrated at 150°C in a vacuum oven. The silica was then heated at a temperature of 800°C for 24 hours in an oven through which was passed a stream of dry nitrogen. The silica had a surface area of about $280m^2/g$. 10g of the heat treated silica was placed in a 3-necked round bottomed flask, still under an atmosphere of dry nitrogen. 1.1g of bis (dicarbonyl pentamethyl cyclopentadienyl chromium) was dissolved in $40cm^3$ of dichloromethane. The $[Cr_2(CO)_4(C_5(CH_3)_5)_2]$ is commercially available. The solution, was introduced into the three-necked flask using a syringe. The slurry was stirred and the solvent removed under vacuum to produce free flowing, particles. The catalyst contained approximately 2% by weight of chromium.

Catalyst Activation

1.7g of the catalyst produced as described above was placed in a $100cm^3$ reaction flask under a dry nitrogen atmosphere. The flask was immersed in an oil bath maintained at 250°C, the catalyst being continuously stirred. Vacuum was then applied to the flask which remained in the oil bath for 30 minutes. The flask was removed from the oil bath and allowed to cool to room temperature (approximately 18°C) under an atmosphere of dry nitrogen.

Polymerisation of Ethylene

Ethylene was homopolymerised in a 2.3 litre stainless steel reactor by contacting the monomer with the catalyst in 1.0 litre of isobutane at 90°C under a total pressure of 600 psig (4.14 MPa) for approximately one hour. The hydrogen pressure used was about 15 psig (0.1 MPa). The weight of catalyst used was 0.4g.

The catalyst activity was found to be 950g/gh. The polymer produced had a high load melt index, as determined according to ASTM D1238 Condition F, of 1.1 dg/min, a density of 954f kg/M$^3$ and a molecular weight distribution (Mw/Mn) of 15.1. The polymer contained 0.3 vinyls per 1000 carbon atoms and had a polydispersity index (Kd) as defined by R. Sabia in J. Appl. Polym. Sci. 7, 347-355 (January 1963) of 4.6.

Example 6

Catalyst Preparation

A slurry of $KC_5Me_5$ (16mmol based on $C_5Me_5H$ used) was prepared in tetrahydrofuran (25cm$^3$) substantially according to the method disclosed in J. Organometallic Chem.1984, 273, 221 by W.A. Herrmann et al. To this was added $CrCl_2$(0.89g, 7.25mmol). The mixture was refluxed for three hours and then the solvent was removed under vacuum. The material was then sublimed (10Pa) at 170°C onto a water cooled probe. $[Cr_2(C_5(CH_3)_5)_2]$ was isolated as a brown crystalline solid (1.05g, 45% yield).

A solution of $[Cr_2(CO)_6(C_5H_5)_2]$, 0.94g (2.3mmol) in 200 cm$^3$ of toluene, was added dropwise to a solution of the $[Cr(C_5(CH_3)_5)_2]$, 1.5g (4.6mmol) in 40cm$^3$ of toluene. A dark precipitate was formed which was allowed to settle. The solvent was removed with a syringe and the remaining orange-green solid was washed with petroleum ether (boiling point fraction 40 to 60°C). The solid was recrystallised using dichloro-methane and toluene producing 1.7g (70% yield) of dark brown crystals of $[Cr(C_5(CH_3)_5)_2][Cr(CO)_3(C_5H_5)]$. This preparation of the complex salt is analogous to the method described in Angew. Chem. Internat. Edit. 1969, 8 by A. Miyaki, H. Kondo and M. Aoyama at page 520 et seq.

A commercially available silica sold by Joseph Crosfield and Sons Ltd under the trade designation EP10 was dehydrated at 150°C in a vacuum oven. The silica was then heated at a temperature of 800°C for 24 hours in an oven through which was passed a stream of dry nitrogen. The silica had a surface area of about 280m$^2$/g. 10g of the heat treated silica was placed in a 3-necked round bottomed flask, still under an atmosphere of dry nitrogen. 1.1g of the bis (pentamethyl-cyclopentadienyl) chromium triscarbonyl cyclopentadienyl chromium was dissolved in 40cm$^3$ of dichloromethane. The solution, which was brown in colour, was introduced into the three-necked flask using a syringe. The slurry was stirred and the solvent removed under vacuum to produce free flowing, orange/brown coloured particles. The catalyst contained approximately 2% by weight of chromium.

Catalyst Activation

0.8g of the catalyst produced as described above was placed in a 100cm$^3$ reaction flask under a dry nitrogen atmosphere. The flask was immersed in an oil bath maintained at 200°C, the catalyst being continuously stirred. Within one minute of the flask being placed in the oil bath, the colour of the catalyst changed from orange/brown to dark brown. After 5 minutes, vacuum was applied to the flask which remained in the oil bath for a total of 30 minutes. The flask was removed from the oil bath and allowed to cool to room temperature (approximately 18°C) under an atmosphere of dry nitrogen.

Polymerisation of Ethylene

Ethylene was homopolymerised in a 2.3 litre stainless steel reactor by contacting the monomer with the catalyst in 1.0 litre of isobutane at 90°C under a total pressure of 600 psig (4.14 MPa) for approximately one hour. The hydrogen pressure used was about 15 psig (0.1MPa). The weight of catalyst used was approximately 0.3g.

Example 7

Example 6 was repeated except that the catalyst was activated at a temperature of 250°C instead of 200°C.

Example 8

Example 6 was repeated except that the hydrogen pressure used during the polymerisation reaction was 60 psig (0.414MPa) instead of 15 psig (0.1 MPa).

Example 9

Example 6 was repeated except that the complex salt used to prepare the catalyst was bis cyclopentadienyl chromium tris carbonyl cyclopentadienyl chromium. The complex salt was prepared substantially according to the method disclosed in the article by A.Miyaki et al referred to in Example 1.

Example 10

Example 9 was repeated except that the catalyst was activated at a temperature of 175°C instead of 200°C.

Example 11

Using analogous techniques to those described in the article by Miyaki et al referred to in Example 6, bis cumene chromium was reacted with $[Cr_2(CO)_6(C_5H_5)_2]$ to produce the complex salt $[Cr(C_9H_{12})_2]$ $[Cr(CO)_3(C_5H_5)]$. A catalyst was prepared substantially as described in Example 1. The activated catalyst was used to homopolymerise ethylene as in Example 6.

The properties of the polymers produced in Examples 6 to 11 are given in Table 2.

The two complex salts used to prepare the catalysts used in Examples 6 to 10 had similar structures, the only difference being that the cyclopentadienyl ligands of the cation of the salt used in Examples 6 to 8 were pentamethyl substituted. However, this difference resulted in the polymers having very different properties. Comparing the results of Examples 6 and 9 it can be seen that both catalysts had good activity but that the polymers produced had very different melt indices, melt flow ratios and molecular weight distributions. In addition, the temperature at which the catalysts were activated affected the properties of the polymers produced but in different ways. As can be seen from Examples 6 and 7 an increase in the activation temperature of the catalyst prepared using the salt having pentamethyl cyclopentadienyl ligands increased melt index and Kd and reduced melt flow ratio and molecular weight distribution. Examples 9 and 10, which use a catalyst prepared from a complex salt containing only unsubstituted cyclopentadienyl ligands, show that the melt index increased and the melt flow ratio and molecular weight distribution decreased as the temperature at which the catalyst was activated was decreased. Example 11 shows the effect of using cumene ligands instead of substituted or unsubstituted cyclopentadienyl ligands. The polymer produced in Example 11 had a relatively low melt index, a relatively high melt flow ratio and a relatively high degree of unsaturation as compared with the polymers produced in Examples 6 to 10.

Table 2

| Ex. | Catalyst | Catalyst Activation Temp. (°C) | Polymerisation $H_2$ (psi) | Polymerisation Activity (g/g/h) | + Melt Index (dg/min) | ++ Melt Flow Ratio | Density $kg/m^3$ | Kd* | Molecular Weight Distribution (Mw/Mn) | Vinyl Groups per 1000 carbon atoms |
|---|---|---|---|---|---|---|---|---|---|---|
| 6 | $[Cr(C_5(CH_3)_5)_2][Cr(CO)_3(C_5H_5)]$ | 200 | 15 | 1300 | 0.1 | 104 | 958 | 4.4 | 10.8 | 0.2 |
| 7 | " | 250 | 15 | 1100 | 0.7 | 70 | 963 | 6.3 | 9.0 | 0.2 |
| 8 | " | 200 | 60 | 920 | 6.0 | 56 | 967 | 8.8 | 5.4 | 0.2 |
| 9 | $[Cr(C_5H_5)_2][Cr(CO)_3(C_5H_5)]$ | 200 | 15 | 1050 | 29 | 37 | 965 | - | 3.3 | 0.1 |
| 10 | " | 175 | 15 | 1240 | 79 | 31 | 966 | - | 2.9 | 0.1 |
| 11 | $[Cr(C_9H_{12})_2][Cr(CO)_3(C_5H_5)]$ | 200 | 15 | 131 | 0.06 | 246 | 958 | 10.0 | - | 1.47 |

*Kd is the rheological polydispersity index as defined by R. Sabia in J. Appl. Polm. Sci. 7, 347-355 (January 1963)

\+ ASTM D 1238 Condition E

++ $\frac{\text{Melt Index according to ASTM D 1238 (Condition F)}}{\text{Melt Index according to ASTM D 1238 (Condition E)}}$

## Claims

1. An olefin polymerisation catalyst obtainable by depositing on a dry inorganic oxide a chromium-containing organometallic complex characterised in that the chromium-containing organometallic complex is a bimetallic complex comprising chromium and a second transition metal which complex is representable by the general formula:

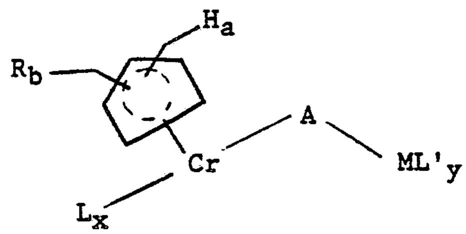

wherein the groups R are $C_1$ to $C_6$ saturated or unsaturated hydrocarbyl groups;
H is hydrogen
a and b are individually 0 or an integer from 1 to 5, the sum of a + b being equal to 5;
M is a transition metal selected from the group consisting of Ti, Zr, Hf, V, Cr, Fe, Nb, Mn, Ni and Co;
the groups L and L′ are ligands which are individually a carbonyl ligand or a $C_1$ to $C_{15}$ hydrocarbyl ligand;
x is an integer from 1 to 3 depending on the available co-ordination sites on the chromium atom;
y is an integer from 1 to 5 depending on the available co-ordination sites on the transition metal M and
A represents the linkage between the chromium atom and the transition metal M and is a direct metal-metal bond, an ionic bond, at least one carbonyl-bridging group or a combination thereof.

2. An olefin polymerisation catalyst as claimed in claim 1 in which the groups R are selected from the group consisting of methyl, ethyl, propyl, isopropyl, n-butyl, isobutyl, n-pentyl and n-hexyl.

3. An olefin polymerisation catalyst as claimed in claim 1 or claim 2 in which b is 5.

4. An olefin polymerisation catalyst as claimed in claim 3 in which R is methyl.

5. An olefin polymerisation catalyst as claimed in any one of claims 1 to 4 in which the ligands L and L′ are individually carbonyl, methyl or substituted or unsubstituted cyclopentadienyl ligands.

6. An olefin polymerisation catalyst as claimed in claim 5 in which at least one L′ ligand is a substituted or unsubstituted cyclopentadienyl ligand.

7. An olefin polymerisation catalyst as claimed in claim 5 or claim 6 in which the L ligands are carbonyl ligands.

8. An olefin polymerisation catalyst as claimed in any one of the preceeding claims in which M is Cr.

9. An olefin polymerisation catalyst as claimed in any one of claims 1 to 8 in which the chromium-containing organometallic complex is a binuclear chromium complex in which M is Cr, y is an integer from 1 to 3, b is 5 and the substituted groups R are the same or different and are alkyl groups having from 1 to 6 carbon atoms.

10. An olefin polymerisation catalyst as claimed in claim 1 in which the chromium-containing organometallic complex is a complex salt in which A is an ionic bond, L is carbonyl, x is 3, M is Cr, y is 2 and the L′ ligands are individually (a) benzene which can be substituted with up to six $C_1$ to $C_6$ hydrocarbyl groups which can be the same or different provided that the total number of carbon atoms does not exceed 15 or (b) cyclopentadienyl which can be substituted with up to five $C_1$ to $C_6$ hydrocarbyl groups which can be the same or different, provided that the total number of carbon atoms does not exceed 15.

11. An olefin polymerisation catalyst as claimed in claim 10 in which the two L′ ligands are selected from the group consisting of cumene, benzene, xylene, hexamethyl benzene and toluene ligands.

12. An olefin polymerisation catalyst as claimed in claim 10 in which the two L′ ligands are selected from the group consisting of cyclopentadienyl or pentamethylcyclopentadienyl ligands.

13. An olefin polymerisation catalyst as claimed in claim 1 in which the chromium-containing organometallic complex is selected from the group consisting of $[Cr_2(CO)_4(C_5(CH_3)_5)_2]$; $[Cr(C_5(CH_3)_5)_2][Cr(CO)_3(C_5H_5)]$; $[Cr(C_5H_5)_2][Cr(CO)_3(C_5H_5)]$; $[Cr(C_9H_{12})_2][Cr(CO_3)(C_5H_5)]$; $[VCr(CO)_3(C_5H_5)_3]$; $[ZrCr(CO)_3CH_3(C_5H_5)_3]$; $[Cr_2(CO)_6(C_5H_5)_2]$ and $[Cr_2(CO)_4(C_5H_5)_2]$

14. An olefin polymerisation catalyst as claimed in any one of the preceeding claims in which the inorganic oxide comprises a major amount of silica.

15. An olefin polymerisation catalyst as claimed in any one of the preceeding claims in which the amount of chromium in the form of the chromium-containing bimetallic complex deposited on the inorganic oxide is from 0.01 to 10% by weight of the total weight of the complex and inorganic oxide.

16. An olefin polymerisation catalyst as claimed in claim 15 in which the amount of chromium in the form of chromium-containing bimetallic complex deposited on the inorganic oxide is from 1 to 2%.

17. A process for the production of polyolefins comprising contacting the olefin monomer or monomers, with an olefin polymerisation catalyst as claimed in any one of claims 1 to 16 at a temperature and pressure sufficient to initiate the polymerisation reaction.

18. A process as claimed in claim 17 in which the polyolefin is a homopolymer of ethylene or a copolymer of ethylene with minor amounts of at least one $C_3$ to $C_8$ alpha-olefin.

19. A process as claimed in claim 17 or claim 18 in which the olefin polymerisation catalyst is activated before being contacted with the olefin monomer or monomers by heating at a temperature of at least 100°C but less than 700°C for a period from 5 mins to 24 hours.

20. A process as claimed in claim 19 in which the catalyst is activated by heating at a temperature of from 100 to 350°C for a period of time from 10 to 120 minutes.

21. A process as claimed in an one of claims 17 to 20 in which the polymerisation reaction is carried out in the presence of hydrogen.

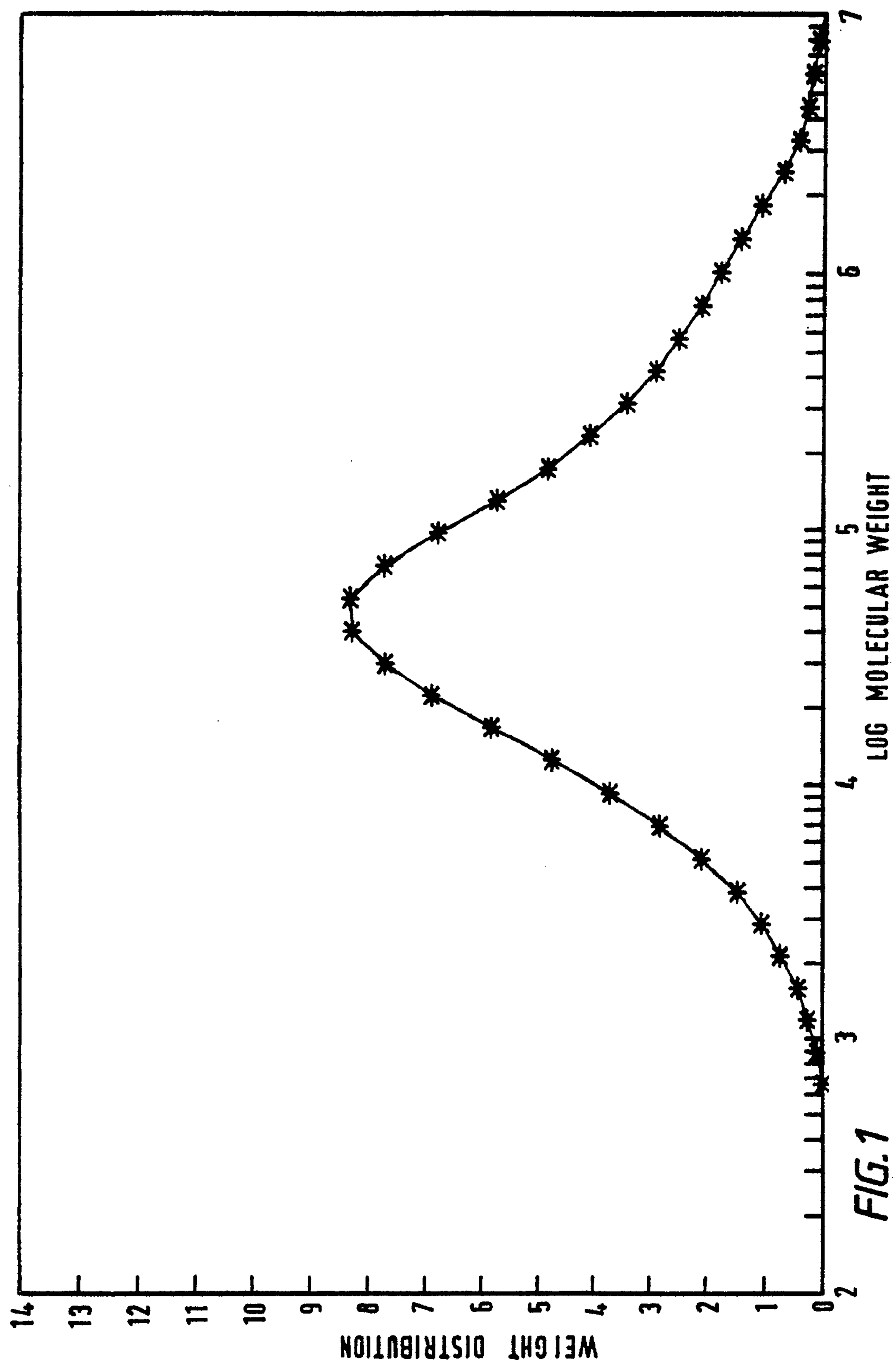
WEIGHT DISTRIBUTION
0
1
2
3
4
5
6
7
8
9
10
11
12
13
14
LOG MOLECULAR WEIGHT
2
3
4
5
6
7

FIG.1